# EUROPÄISCHE PATENTSCHRIFT

(11) **EP 3 103 320 B1**
(45) Veröffentlichungstag und Bekanntmachung des Hinweises auf die Patenterteilung: **11.10.2017**
(21) Anmeldenummer: 15171844.2
(22) Anmeldetag: 12.06.2015
(51) Int. Cl.: A01D 65/02

(54) **TRAGSCHIENE EINES ÄHRENHEBERS FÜR ERNTEGUT**
SUPPORT RAIL FOR A CROP LIFTER
RAIL DE SUPPORT D'UN RELEVEUR D'ÉPIS POUR RÉCOLTE

(43) Veröffentlichungstag der Anmeldung: 14.12.2016
(73) Patentinhaber: Gebr. Schumacher Gerätebaugesellschaft mbH, 57612 Eichelhardt (DE)
(72) Erfinder: HÖLLER, Frank, 57629 Stein Wingert (DE)
(74) Vertreter: Neumann Müller Oberwalleney & Partner Patentanwälte

(56) Entgegenhaltungen:
- DE-U1- 9 106 921
- FR-A3- 2 863 143
- GB-A- 988 885
- GB-A- 1 396 078
- US-A- 3 913 306

## Beschreibung

Die Erfindung betrifft eine Tragschiene eines Ährenhebers für Erntegut, mit einer Haupterstreckungsrichtung, wobei zwischen einem ersten Ende und einem zweiten Ende der Tragschiene ein als Gleitkufe ausgebildeter Abschnitt angeordnet ist, sowie einen Ährenheber für ein Mähwerk einer Erntemaschine, mit einem Halmheber und einer den Halmheber tragenden Tragschiene.

Bei bekannten Erntemaschinen-Mähwerken sind entlang eines Mähbalkens verteilt Mähfinger angeordnet, die den Messerbalken führen und die Gegenschneide für die Mähklingen bilden. Um abgeknicktes oder lagerndes Halmgut sicher mähen zu können, werden Ährenheber eingesetzt, die das Halmgut anheben. Gattungsgemäß weisen die Ährenheber eine Tragschiene und einen Halmheber auf. Die Tragschiene dient der Befestigung des Ährenhebers am Mähbalken des Mähwerks und führt den Halmheber, an dessen Oberseite das Halmgut angehoben wird. Beim Betrieb der Erntemaschine muss die Tragschiene mit geringem Abstand über der Bodenoberfläche geführt werden, damit das abgeknickte bzw. lagernde Halmgut möglichst vollständig und zuverlässig mit dem Halmheber anhebbar ist. Der dem Boden nächstgelegene Abschnitt der Tragschiene schleift dabei annähernd dauerhaft, wie eine Gleitkufe über die Bodenoberfläche. Auf Grund steigender Arbeitsgeschwindigkeiten der Erntemaschinen und der Unebenheiten der Bodenoberfläche ist die Tragschiene einem erheblichen abrasiven Verschleiß ausgesetzt.

Aus der DE 101 23 248 C1 ist ein Ährenheber bekannt, bei dem die Tragschiene in einem Bereich zwischen dem zweiten Ende und einem Halter durch eine Profilierung biegesteif gestaltet ist. Der unmittelbare Bereich am zweiten Ende ist durch die Befestigung des Halmhebers an der Tragschiene bereits ausreichend versteift, so dass sich die Profilierung auf den anschließenden Bereich erstreckt. Dies ist insbesondere der gleitschuhartige Bereich, mit dem die Tragschiene auf dem Boden aufliegt, und der daran anschließende Bereich bis zum Halter. Dazu ist die Tragschiene in diesem Bereich im Querschnitt bogenförmig gewölbt ist.

Aus der Druckschrift WO 2011/143681 A1 ist ein Ährenheber bekannt, bei dem im vorderen Teil des unteren Oberflächenbereiches des Ährenhebers, welcher bestimmungsgemäß im Betrieb häufig am Untergrund gleitet, ein Fläche angeordnet ist, wobei diese Fläche mit einer Verschleißplattierung aus einem vom Material des Trägers unterschiedlichen Material versehen ist, wobei die Verschleißplattierung durch einen austauschbar am Ährenheber montierten Plattierungsteil gebildet ist.

Eine Aufgabe der Erfindung besteht darin, eine Tragschiene für einen Ährenheber in Bezug auf mindestens eine der Eigenschaften Verschleiß, Biegesteifigkeit und Torsionssteifigkeit durch eine gegenüber dem Stand der Technik weiterentwickelte Profilierung zu verbessern.

Gelöst wird die Aufgabe erfindungsgemäß durch eine Tragschiene für einen Ährenheber und durch einen Ährenheber gemäß der nebengeordneten Ansprüche. In den Unteransprüchen sind bevorzugte Ausführungsformen und vorteilhafte Weiterbildungen angegeben.

Die erfindungsgemäße Tragschiene eines Ährenhebers für Erntegut weist eine Haupterstreckungsrichtung auf, wobei zwischen einem ersten Ende und einem zweiten Ende der Tragschiene ein als Gleitkufe ausgebildeter Abschnitt angeordnet ist. Die Haupterstreckungsrichtung wird auch als Längsachse bezeichnet, wobei diese nicht als Gerade zu verstehen ist, sondern entlang der in der Regel in Längsrichtung gebogenen Tragschiene definiert sein soll. Der als Gleitkufe ausgebildete Abschnitt wird nachfolgend vereinfachend auch lediglich als Gleitkufe bezeichnet. Die Gleitkufe wird vorzugsweise durch einen Abschnitt der Tragschiene selbst gebildet, kann jedoch auch als separates Bauteil an der Tragschiene angeordnet sein.

Erfindungsgemäß ist vorgesehen, dass der als Gleitkufe ausgebildete Abschnitt in einem Schnitt quer zu der Haupterstreckungsrichtung ein wellenförmiges Profil aufweist. Wellenförmig im Sinne der Erfindung bedeutet, dass das Profil im Schnitt mindestens eine Wellenlänge ausbildet, beispielsweise im Sinne einer S-Form mit einem Wellenberg und einem Wellental. Das wellenförmige Profil ist entlang des als Gleitkufe ausgebildeten Abschnitts durchgehend oder nur bereichsweise ausgebildet. Bereichsweise bedeutet, dass das wellenförmige Profil beispielsweise unterbrochen sein kann.

Ein Vorteil der erfindungsgemäßen Tragschiene besteht darin, dass durch das wellenförmige Profil ein gegenüber einem einfach gewölbten Profil biegefesteres Profil zur Verfügung gestellt werden kann, dessen Verschleißverhalten zusätzlich verbessert ist. Weiterhin weist das wellenförmige Profil vorteilhaft eine höhere Torsionssteifigkeit auf, als ein einfach gewölbtes Profil.

Der erfindungsgemäße Ährenheber für ein Mähwerk einer Erntemaschine weist einen Halmheber und eine den Halmheber tragenden Tragschiene auf, wobei ein als Gleitkufe ausgebildeter Abschnitt der Tragschiene in einem Schnitt quer zu der Haupterstreckungsrichtung ein wellenförmiges Profil aufweist. Beispielsweise weist die Tragschiene ein erstes Ende auf, welches an dem Mähwerk befestigbar ist und ein zweites Ende, an welchem der Halmheber angeordnet ist, wobei die Tragschiene sich zwischen dem ersten Ende und dem zweiten Ende entlang der Längsachse erstreckt. Mit dem als Gleitkufe ausgebildeten Abschnitt wird die Tragschiene im Einsatz dicht über dem Boden geführt und kommt mit diesem in Berührung, je nach Mähwerk und Erntegut stärker oder weniger stark. Dadurch ist die Gleitkufe einem erheblichen Verschleiß durch Abnutzung unterworfen. An dem Mähwerk befestigbar bedeutet, im Sinne der Erfindung, dass das erste Ende der Tragschiene eine entsprechende Gestaltung aufweist, die eine Befestigung an dem Mähwerk erlaubt. Der Halmheber ist beispielsweise mit der Tragschiene verschweißt, kann aber auch in reversibler Art und Weise befestigt sein. Die Tragschiene kann überwiegend aus Metall, insbesondere aus Stahlblech gefertigt sein. Die Erfindung bezieht sich jedoch ausdrücklich auch auf Tragschienen bzw. Ährenheber, die ganz oder teilweise aus Kunststoffteilen gefertigt sind.

Bevorzugt ist vorgesehen, dass die Gleitkufe in einem Schnitt quer zu der Längsachse ein wellenförmiges Profil mit mindestens zwei Wellenbergen auf einer dem Halmheber abgewandten Seite der Tragschiene aufweist. Die dem Halmheber abgewandten Seite der Tragschiene ist diejenige Seite, welche im Betrieb auf dem Boden aufsetzt und wird nachfolgend als Außenseite bezeichnet. Gemäß einer bevorzugten Ausführungsform ist der als Gleitkufe ausgebildete Abschnitt also dazu vorgesehen, mit seiner Außenseite über einen Boden geführt zu werden, wobei von der Außenseite mindestens zwei Wellenberge des wellenförmigen Profils aufragen. Damit ist die Richtung der mindestens zwei Wellenberge definiert, nämlich in Einbaulage Richtung Boden. Der Fachmann erkennt, dass die Wellenberge dennoch auch auf der der Außenseite gegenüberliegenden Innenseite der Gleitkufe ausgebildet sind, nämlich in Einbaulage als Einkerbung in Richtung Boden.

Ein Vorteil des wellenförmigen Profils mit mindestens zwei Wellenbergen auf der Außenseite, das hier auch als Wellenprofil bezeichnet wird, besteht darin, dass die Tragschiene dadurch ein bei fortschreitendem Verschleiß im Bereich der Gleitkufe eine höhere Stabilität bietet. Bei Tragschienen mit einfacher Wölbung nach dem Stand der Technik kommt es, wenn die Gleitkufe verschleißt, zu einer Lochbildung in deren Mitte. Das Loch wird mit zunehmendem Verschleiß größer. Mit dem erfindungsgemäßen Wellenprofil entstehen bei zwei Wellenbergen statt dessen zwei längliche Schlitze, deren Breite zusammengenommen geringer ist, als die Breite des einzelnen Lochs und deren Fläche geringer ist, als die Fläche des Lochs. Darüber hinaus bleibt, im Querschnitt gesehen, durch das zwischen den Wellenbergen angeordnete Wellental ein Mittelsteg zwischen den länglichen Schlitzen stehen, der der Tragschiene bei fortgeschrittenem Verschleiß zusätzliche Biegesteifigkeit verleiht. Insgesamt ergibt sich daraus eine höhere Standzeit der erfindungsgemäßen Tragschiene bzw. des erfindungsgemäßen Ährenhebers.

Gemäß einer weiteren bevorzugten Ausführungsform ist vorgesehen, dass der als Gleitkufe ausgebildete Abschnitt seitliche Flanken aufweist, wobei die seitlichen Flanken zu einer der Außenseite gegenüberliegenden Innenseite hin angewinkelt sind. Der Winkel, den die Flanken mit einer Horizontalen des Profils einnehmen, beträgt vorzugsweise mehr als 30 Grad, besonders bevorzugt etwa 40 Grad und höchstens etwa 90 Grad.

Gemäß einer bevorzugten Ausführungsform ist vorgesehen, dass das wellenförmige Profil über eine Länge des als Gleitkufe ausgebildeten Abschnitts in seiner Ausprägung variiert. Unter der Ausprägung ist die Profilhöhe zu verstehen, also insbesondere der Abstand zwischen Wellenbergen und Wellentälern. Die Ausprägung des Profils nimmt besonders bevorzugt von einem mittleren Bereich des als Gleitkufe ausgebildeten Abschnitts aus in beiden Richtungen ab. Weiterhin besonders bevorzugt ist vorgesehen, dass das Profil genau ein Wellental zwischen genau zwei Wellenbergen aufweist, wobei die Höhe der zwei Wellenberge gegenüber dem Wellental jeweils gleich sein kann. Das Profil ist zu einer in Haupterstreckungsrichtung ausgerichteten Ebene bevorzugt spiegelsymmetrisch ausgebildet.

Gemäß einer weiteren bevorzugten Ausführungsform der Tragschiene ist eine Verschleißschutzschicht auf der Außenseite der Gleitkufe aufgebracht. Besonders bevorzugt ist die Verschleißschutzschicht über eine gesamte Breite des Profils aufgebracht. Alternativ ist die Verschleißschutzschicht nur zwischen den Wellenbergen aufgebracht.

Ein weiterer Vorteil des wellenförmigen Profils mit mindestens zwei Wellenbergen besteht darin, dass dieses gegenüber dem Stand der Technik eine vorteilhafte Möglichkeit bietet, die Verschleißschutzschicht an der Gleitkufe anzubringen. Das Wellental zwischen den Wellenbergen mit einem Füllmaterial als Verschleißschutzschicht aufzufüllen hat den Vorteil, dass das Füllmaterial in maximaler Stärke dort angeordnet werden kann, wo der Verschleiß am stärksten ist. Im Gegensatz dazu würde ein Plattenmaterial lediglich in Teilbereichen verschlissen.

Gemäß einer weiteren bevorzugten Ausführungsform ist somit vorgesehen, dass das Profil jeweils ein Wellental zwischen zwei benachbarten Wellenbergen aufweist, wobei mindestens ein Wellental zumindest teilweise durch die Verschleißschutzschicht aufgefüllt ist. Besonders bevorzugt ist dabei die Verschleißschutzschicht bündig in das Wellental eingebracht. Gemäß einer alternativen Ausführungsform ist die Verschleißschutzschicht über die Wellenberge hinausragend aufgebracht.

Ein Material der Verschleißschutzschicht ist vorzugsweise so gewählt ist, dass ein Verschleißverhalten der Verschleißschutzschicht einem Verschleißverhalten des als Gleitkufe ausgebildeten Abschnitts vergleichbar ist. Es kann jedoch auch vorteilhaft sein, je nach Einsatzzweck, das Füllmaterial geringfügig bis deutlich verschleißfester vorzusehen, als die Gleitkufe selbst, oder auch weniger verschleißfest.

Weiterhin bevorzugt ist das Material der Verschleißschutzschicht so gewählt ist, dass eine Härte der Verschleißschutzschicht einer Härte des als Gleitkufe ausgebildeten Abschnitts vergleichbar ist. Auch hier kann vorteilhaft vorgesehen sein, das Füllmaterial, je nach Einsatzzweck, geringfügig bis deutlich härter vorzusehen, als die Gleitkufe selbst, oder auch weniger hart.

Gemäß einer weiteren bevorzugten Ausführungsform ist somit vorgesehen, dass bei dem Profil mit jeweils einem Wellental zwischen zwei benachbarten Wellenbergen mindestens ein Sperrnoppen zum Aufstauen von Bodenmaterial in mindestens einem Wellental angeordnet ist. Bevorzugt sind mehrere Sperrnoppen je Wellental vorgesehen, insbesondere zwei Sperrnoppen. Als Sperrnoppen dient jedes in dem Wellental anzuordnende Hindernis, dass ein Aufstauen von Bodenmaterial ermöglicht. Besonders bevorzugt ist der Sperrnoppen als Schweißpunkt in das Wellental eingebracht. Das aufgestaute Bodenmaterial dient vorteilhaft als Verschleißschutz für die Gleitkufe.

Als weitere Ausführungsform wäre ein Profil denkbar, bei dem die Wellenberge bzw. dazwischen angeordnete Wellentäler nicht durch eine im Wesentlichen biegende Verformung des als Gleitkufe vorgesehenen Bereichs gebildet werden, sondern durch Pressformung, Schmieden oder Gießen, so dass die Wellenberge auch als erhabene Form hervorstehen. Dabei müssen die Wellenberge in Richtung der Längsachse nicht notwendigerweise mit konstanter Breite ausgeführt sein. Ebenso wenig müssen die Wellenberge geradlinig verlaufen, sondern können auch, beispielsweise, mäandrierend ausgeführt sein

Nachfolgend wird die Erfindung anhand von Ausführungsbeispielen mit Bezug auf die beiliegenden Zeichnungen näher erläutert. Die Ausführungen sind lediglich beispielhaft und schränken den allgemeinen Erfindungsgedanken nicht ein.

### Es zeigen

Figur 1 einen Ährenheber mit einer Tragschiene nach dem Stand der Technik, an einem Mähwerk einer Erntemaschine;
Figuren 2a und 2b zwei Ansichten einer Tragschiene nach dem Stand der Technik, jeweils im Schnitt;
Figuren 3 und 4 zwei Ansichten einer Ausführungsform einer erfindungsgemäßen Tragschiene;
Figuren 5a bis 5e fünf Ansichten, jeweils in einem Schnitt quer zu der Haupterstreckungsrichtung der Tragschiene entsprechend der Schnittlinien gemäß Figur 4;
Figuren 6a, 6b und 6c einen Verschleiß der erfindungsgemäßen Tragschiene gemäß Figuren 3 und 4;
Figuren 7a, 7b und 7c einen Verschleiß der Tragschiene nach dem Stand der Technik gemäß Figuren 2a und 2b;
Figuren 8a und 8b zwei Ansichten einer weiteren Ausführungsform der erfindungsgemäßen Tragschiene, jeweils im Schnitt;
Figuren 9a bis 9d vier weitere Ausführungsformen der erfindungsgemäßen Tragschiene gemäß Figur 8b, jeweils im Schnitt quer zu der Haupterstreckungsrichtung;
Figuren 10a bis 10c drei Ansichten einer weiteren Ausführungsform der erfindungsgemäßen Tragschiene, jeweils im Schnitt;
Figur 11 eine weitere Ausführungsform der erfindungsgemäßen Tragschiene im Schnitt.

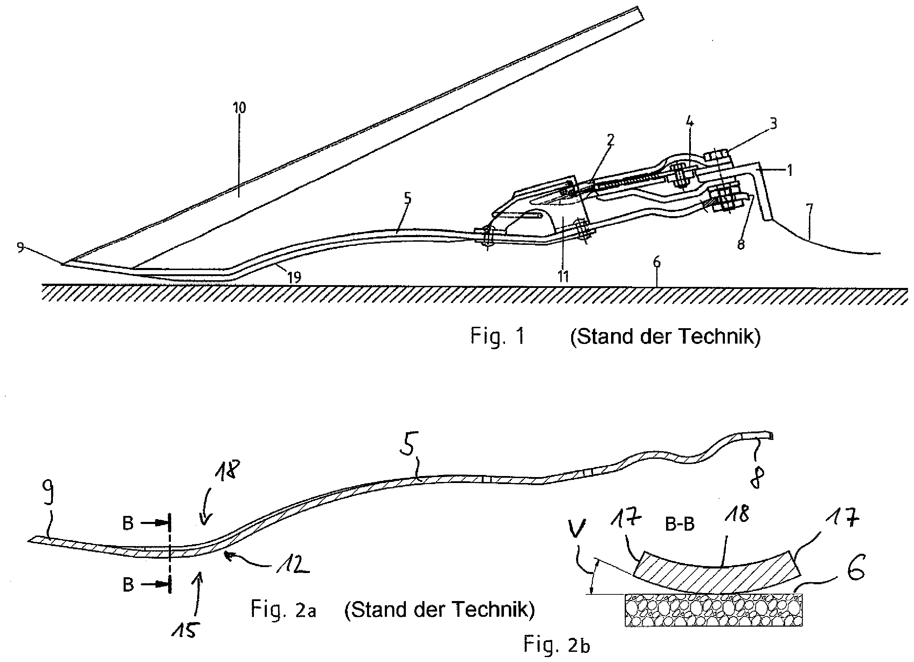

In der Figur 1 ist ein Ausführungsbeispiel eines Ährenhebers mit einer Tragschiene 5 nach dem Stand der Technik dargestellt. Ein Mähbalken 1 ist in schematischer Darstellung gezeigt, von dem ein Mähfinger 2 vorstehend dargestellt ist. Dieser ist über eine Schraube 3 am Mähbalken 1 festgelegt. Es sind in die Zeichenebene hinein, bzw. aus dieser heraus mehrere weitere Mähfinger 2 dem Mähbalken 1 mit Abstand zueinander zugeordnet. Die Mähfinger 2 dienen zur Führung eines Messerbalkens 4, der Mähklingen zum Abtrennen des Ernteguts aufweist. Der Mähfinger 2 steht bei abgesenktem Mähtisch in einem Winkel von etwa 18° mit seiner Spitze zum Boden 6 geneigt, damit möglichst tief geschnitten werden kann, ohne den Mähtisch so weit absenken zu müssen, dass die Schneidwerkswanne 7 auf dem Boden 6 zur Auflage kommt. Ein erstes Ende 8 der aus einem Flachmaterial als Ausgangsmaterial hergestellten Tragschiene 5 ist beispielsweise über eine gabelförmige Ausbildung mit einer über die Schraube 3 festgelegten Scheibe mit Ringnut am Mähbalken 1 festlegbar. An einem von dem ersten Ende 8 entfernten, zweiten Ende 9 ist an der Tragschiene 5 ein Halmheber 10 befestigt, der im Winkel zur Tragschiene 5 ansteigend in Richtung zum Mähbalken 1 hin verläuft. Die Tragschiene 5 ist mittels eines Halters 11 am Mähfinger 2, bzw. dessen der Tragschiene 5 abgewandten oberen Fläche abgestützt.

Die Figuren 2a und 2b zeigen zwei Ansichten einer Tragschiene 5 nach dem Stand der Technik, jeweils im Schnitt, wobei die Tragschiene 5 mit derjenigen aus Figur 1 weitgehend vergleichbar ist. Die Figur 2a zeigt die Tragschiene 5 in einem Schnitt entlang der Haupterstreckungsrichtung von dem ersten Ende 8 bis zu dem zweiten Ende 9. Eine Außenseite 15 ist im Betrieb an einer Erntemaschine dem Boden 6 zugewandt. Der als Gleitkufe gestaltete Abschnitt 12 der Tragschiene 5 ist dazu vorgesehen, über den Boden 6 zu gleiten und unterliegt dementsprechend einem erheblichen Verschleiß. Die Figur 2b zeigt einen Schnitt B-B aus Figur 2a, quer zu der Haupterstreckungsrichtung durch den als Gleitkufe ausgeführten Abschnitt 12. Darin ist die von einer Innenseite 18 der Tragschiene 5 gesehen einfach konkave Wölbung im Bereich der Gleitkufe 12 erkennbar, durch die sich zwischen den Flanken 17 der Gleitkufe und dem Boden 6 ein Winkel V einstellt.

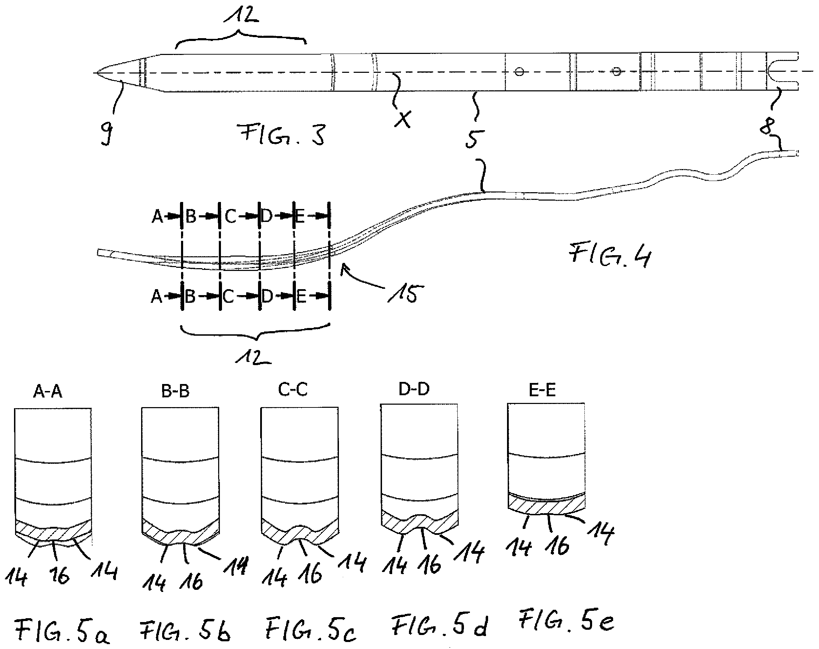

Die Figuren 3 und 4 zeigen jeweils Ansichten einer ersten Ausführungsform einer erfindungsgemäßen Tragschiene 5, die im Folgenden jeweils ohne Halmheber, Befestigungselemente oder Mähwerk dargestellt ist. Die in der Figur 1 gezeigte Konfiguration des Ährenhebers ist lediglich beispielhaft. Die Anordnung der Tragschiene 5 zu dem Halmheber oder dem Mähwerk kann davon abweichen. Die erfindungsgemäße Tragschiene 5 weist ein erstes Ende 8 und ein zweites Ende 9 auf. Die Tragschiene 5 erstreckt sich zwischen dem ersten Ende 8 und dem zweiten Ende 9 entlang einer Haupterstreckungsrichtung oder Längsachse X und weist einen als Gleitkufe ausgebildeten Abschnitt 12 auf, der auch vereinfacht nur als Gleitkufe 12 bezeichnet wird. In den Figuren 5a bis 5e ist erkennbar, dass der Tragschiene 5 im Bereich der Gleitkufe 12 in verschiedenen Schnitten quer zu der senkrecht zur Zeichnungsebene verlaufenden Haupterstreckungsrichtung X jeweils ein wellenförmiges Profil aufweist. Die dargestellte Ausführungsform der Tragschiene 5 weist zwei Wellenberge 14 auf einer Außenseite 15 der Tragschiene 5 auf. Die Außenseite 15 ist die im Betrieb dem Boden 6 zugewandte Seite. Die Figuren 5a bis 5e zeigen fünf aufeinander folgende Schnitte der Gleitkufe 12 in etwa gleichen Abständen, beginnend nahe dem vorderen Ende 9. Dadurch wird verdeutlicht, dass das wellenförmige Profil entlang der Haupterstreckungsrichtung X über die Länge des als Gleitkufe ausgebildeten Abschnitts 12 in seiner Ausprägung variiert.

Die Figur 5a zeigt einen Schnitt entlang der Linie A-A in der Figur 4. Das Wellenprofil, mit den Wellenbergen 14 und dem dazwischen angeordneten Wellental 16, ist hier, am vorderen, dem zweiten Ende 9 zugewandten Rand der Gleitkufe 12 nur gering ausgeprägt.

Die Figur 5b zeigt einen Schnitt entlang der Linie B-B in der Figur 4. Das Wellenprofil, mit den Wellenbergen 14 und dem dazwischen angeordneten Wellental 16, ist hier, zwischen dem Rand und der Mitte der Gleitkufe 12 deutlicher ausgeprägt, als in Figur 5a.

Die Figur 5c zeigt einen Schnitt entlang der Linie C-C in der Figur 4. Das Wellenprofil, mit den Wellenbergen 14 und dem dazwischen angeordneten Wellental 16, ist hier, etwa in der Mitte der Gleitkufe 12 am deutlichsten ausgeprägt.

Die Figur 5d zeigt einen Schnitt entlang der Linie D-D in der Figur 4. Das Wellenprofil, mit den Wellenbergen 14 und dem dazwischen angeordneten Wellental 16, ist hier, zwischen der Mitte und dem Rand der Gleitkufe 12 geringfügig schwächer ausgeprägt, als in der Figur 5c.

Die Figur 5e zeigt einen Schnitt entlang der Linie E-E in der Figur 4. Das Wellenprofil, mit den Wellenbergen 14 und dem dazwischen angeordneten Wellental 16, ist hier, am hinteren, von dem zweiten Ende 9 entfernten Rand der Gleitkufe 12 deutlich geringer ausgeprägt, als in der Mitte.

Die Figuren 5a bis 5e zeigen, dass das wellenförmige Profil über eine Länge des als Gleitkufe 12 ausgebildeten Abschnitts in seiner Ausprägung variiert, wobei die Ausprägung des Profils von einem mittleren Bereich (Figur 5c) des als Gleitkufe 12 ausgebildeten Abschnitts aus in beiden Richtungen abnimmt. Bevorzugt weist das Profil genau ein Wellental 16 zwischen genau zwei Wellenbergen 14 auf, wobei die Höhe der zwei Wellenberge 14 gegenüber dem Wellental 16 jeweils gleich ist.

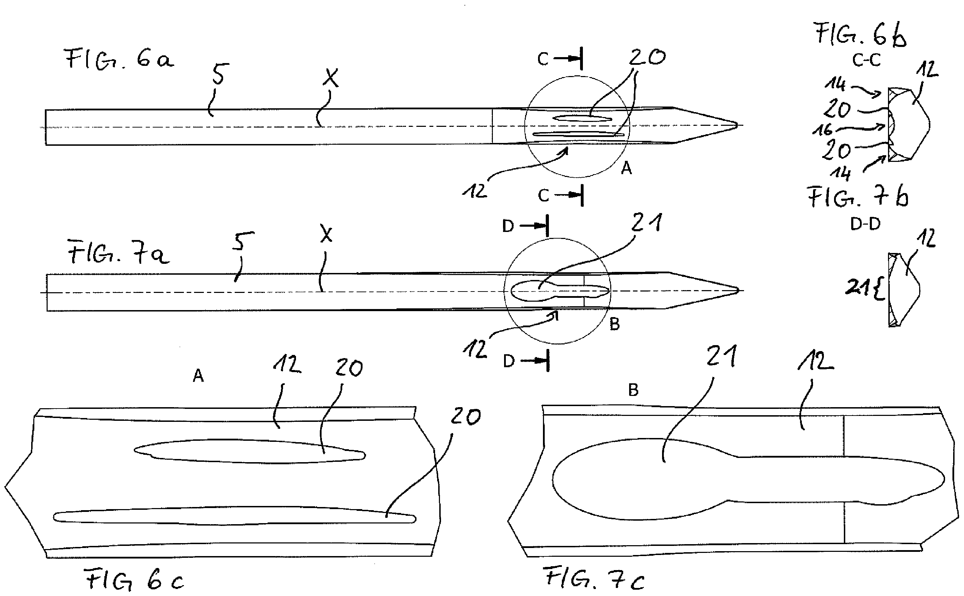

Die Figuren 6a bis 6c und 7a bis 7a bis 7c dienen zur Darstellung der Verschleißerscheinungen an der erfindungsgemäßen Tragschiene 5 gemäß Figuren 3 und 4 im Vergleich zu der Tragschiene nach dem Stand der Technik gemäß Figuren 2 a und 2b. Der Verschleiß ist in Form von länglichen Schlitzen 20 und Löchern 21 qualitativ zeichnerisch dargestellt, wobei die zeichnerischen Darstellungen des Verschleißes auf tatsächlichen Verschleißversuchen mit den verschiedenen Tragschienen 5 unter vergleichbaren Bedingungen beruhen.

Die Figuren 6a, 6b und 6c zeigen die erfindungsgemäße Tragschiene 5, wobei in der Ansicht gemäß Figur 6a im Bereich der Gleitkufe 12 längliche Schlitze 20 als Verschleißerscheinung erkennbar sind. Die länglichen Schlitze 20 sind in dem Detail A in Figur 6c vergrößert dargestellt. Die Figur 6b zeigt die Gleitkufe 5 im Schnitt C-C durch die Gleitkufe 12, quer zu der Haupterstreckungsrichtung X, in der die Schlitze 20 erkennbar im Bereich der Wellenberge 14 des erfindungsgemäßen Wellenprofils angeordnet sind, wobei die Wellenberge 14 und das Wellental 16 durch den fortgeschrittenen Verschleiß in der Figur 6b nur noch ansatzweise erkennbar sind.

Die Figuren 7a, 7b und 7c zeigen die Tragschiene 5 nach dem Stand der Technik, wobei in der Ansicht gemäß Figur 7a im Bereich der Gleitkufe 12 Verschleißerscheinungen erkennbar sind. Im Gegensatz zu den länglichen Schlitzen 20 in dem Detail A in Figur 6c, ist in dem Detail B in Figur 7c ein zusammenhängender, wesentlich breiterer Verschleißbereich 21 erkennbar, der zur Abgrenzung hier als Loch 21 bezeichnet wird. Die Figur 7b zeigt die Tragschiene 5 im Schnitt D-D durch die Gleitkufe 12, quer zu der Haupterstreckungsrichtung X, in der das Loch 21 erkennbar etwa mittig im Scheitelbereich der einfachen Wölbung der Gleitkufe 12 ausgebildet ist. Insbesondere der Vergleich der Detailansichten A in Figur 6c und B in Figur 7c lässt erkennen, dass die Tragschiene 5 in dem Bereich der Gleitkufe 12 mit dem erfindungsgemäßen Wellenprofil eine höhere Stabilität aufweist, da die zwei länglichen Schlitze 12 weniger destabilisierend wirken, als das Loch 21, insbesondere da sich dieses über einen wesentlich höheren Anteil der Breite quer zur Haupterstreckungsrichtung X erstreckt, als die zwei länglichen Schlitze 20 zusammen.

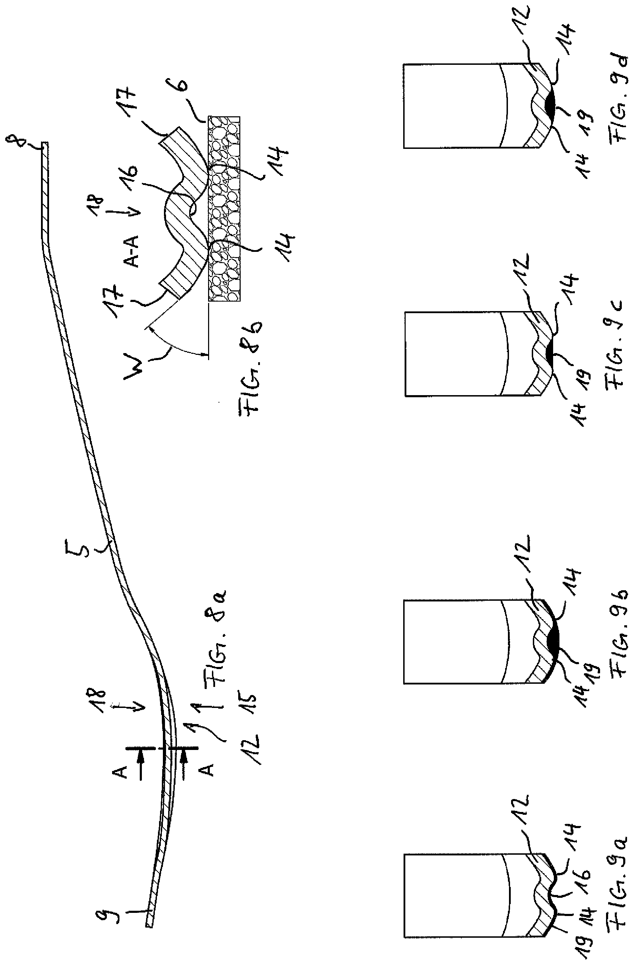

Die Figuren 8a und 8b zeigen eine weitere Ausführungsform der erfindungsgemäßen Tragschiene 5, die sich von der Ausführungsform gemäß Figur 3 zunächst im Wesentlichen durch einen flacheren Verlauf im Bereich des ersten Endes 8 unterscheidet. In der Figur 8b ist ein Schnitt durch die Gleitkufe 12, quer zur Haupterstreckungsrichtung X entsprechend der Linie A-A in Figur 8a gezeigt. Das erfindungsgemäße Wellenprofil mit zwei Wellenbergen 14 und einem Wellental 16 auf der Außenseite 15 weist in dieser Ausführungsform einen weiteren Unterschied zum Stand der Technik auf, der in einem Vergleich der Figuren 8b und 2b besonders deutlich erkennbar ist. Die Flanken 17 des Wellenprofils im Bereich der Gleitkufe 12 sind bei der Ausführungsform gemäß Figur 8b stärker in Richtung der Innenseite 18 angewinkelt, als bei dem einfach konkav gebogenen Profil nach dem Stand der Technik gemäß Figur 2b. Der Winkel W zwischen dem Boden 6 und der Flanke 17 ist also größer, als der Winkel V bei dem einfach konkav gebogenen Profil, der in der Regel etwa 25 Grad beträgt. Bei dem erfindungsgemäßen Wellenprofil beträgt der Winkel W bevorzugt mindestens 30 Grad und bis zu 90 Grad. Die steileren Flanken 17 erlauben ein besseres Verdrängen von Bodenmaterial und tragen darüber hinaus zur Biegesteifigkeit in der Haupterstreckungsrichtung und zur Torsionssteifigkeit der Tragschiene 5 bei.

In den Figuren 9a bis 9d sind vier weitere Ausführungsformen der Tragschiene 5 dargestellt. Gezeigt ist jeweils nur ein Schnitt durch die Gleitkufe 12, quer zu der Haupterstreckungsrichtung X, die hier also jeweils senkrecht zur Zeichenebene steht. Den Ausführungsformen gemäße der Figuren 9a bis 9d ist gemein, dass eine Verschleißschutzschicht 19 auf der Außenseite 15 der Gleitkufe 12 aufgebracht ist.

Bei der Tragschiene 5 nach Figur 9a ist die Verschleißschutzschicht 19 über eine gesamte Breite des Wellenprofils aufgebracht. Bei der Tragschiene 5 nach Figur 9b ist vorgesehen, dass die Verschleißschutzschicht 19 über die Wellenberge 14 hinausragend aufgebracht ist.

Bei der Tragschiene 5 nach Figur 9c ist die Verschleißschutzschicht 19 nicht über eine gesamte Breite des Wellenprofils aufgebracht, sondern nur das Wellental ist durch die Verschleißschutzschicht 19 aufgefüllt. Genauer ausgedrückt, ist die Verschleißschutzschicht 19 bündig mit den Wellenbergen 14 in das Wellental 16 eingebracht. Bei der Tragschiene 5 nach Figur 9b ist wiederum vorgesehen, dass nur das Wellental 14 mit der Verschleißschutzschicht 19 gefüllt ist, diese dabei jedoch über die Wellenberge 14 hinausragend aufgebracht ist.

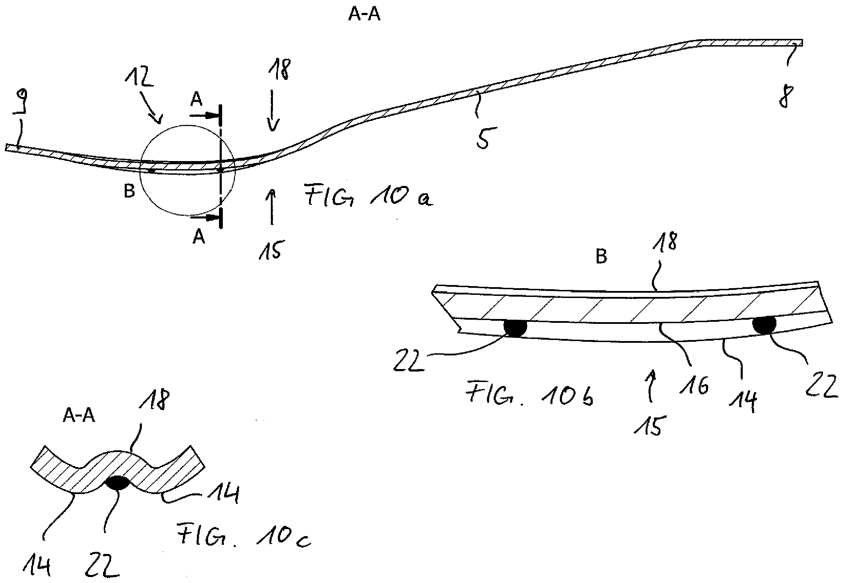

In den Figuren 10a, 10b und 10c ist eine weitere Ausführungsform der Tragschiene 5 dargestellt. Figur 10a zeigt einen Schnitt längs der Haupterstreckungsrichtung X, Figur 10c einen vergrößerten Schnitt quer dazu, entsprechend der Linie A-A. Figur 10b zeigt das Detail B aus Figur 10a vergrößert. Die Ausführungsform weist ein Wellenprofil der Gleitkufe mit zwei Wellenbergen 14 auf der Außenseite 15 auf. In dem Wellental 16 sind zwei als Sperrnoppen 22 bezeichnete Hindernisse angeordnet, die im Betrieb dafür sorgen, dass sich Bodenmaterial in dem Wellental 16 aufstaut, welches als Verschleißschutz für die Gleitkufe 12 wirkt. Die Sperrnoppen 22 können beispielsweise Schweißpunkte sein, die in dem Wellental 16 angebracht sind.

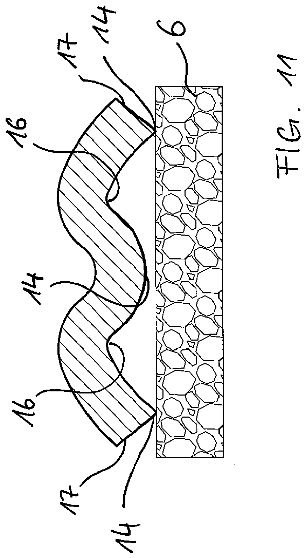

In der Figur 11 eine weitere Ausführungsform der erfindungsgemäßen Tragschiene im Schnitt dargestellt, wobei die Darstellung mit der in Figur 8b gezeigten Ausführungsform vergleichbar ist. Die Ausführungsform gemäß Figur 11 verdeutlicht, dass der als Gleitkufe ausgebildete Abschnitt 12 in dem Schnitt quer zu der Haupterstreckungsrichtung ein wellenförmiges Profil mit mehr als zwei Wellenbergen 14 aufweisen kann. In dem dargestellten Ausführungsbeispiel ist prinzipiell das Profil gemäß Figur 8b um 180 Grad gedreht angeordnet, so dass neben einem mittleren Wellenberg 14 auch zwei Wellenberge 14 an den Flanken 17 dem Boden 6 zugewandt sind. Dementsprechend sind zwei Wellentäler 16 zwischen den Wellenbergen 14 angeordnet. Alternativ kann eine oder beide Flanken 17 auch wiederum vom Boden 6 weg, nach oben umgebogen sein.

### Bezugszeichenliste

- 1: Mähbalken
- 2: Mähfinger
- 3: Schraube
- 4: Messerbalken
- 5: Tragschiene
- 6: Boden
- 7: Schneidwerkswanne
- 8: Erstes Ende der Tragschiene
- 9: Zweites Ende der Tragschiene
- 10: Halmheber
- 11: Halter
- 12: Gleitkufe
- 14: Wellenberg
- 15: Außenseite
- 16: Wellental
- 17: Flanke
- 18: Innenseite
- 19: Verschleißschutzschicht
- 20: Spalt
- 21: Loch
- 22: Sperrnoppen
- V, W: Winkel
- X: Haupterstreckungsrichtung, Längsachse

## Patentansprüche

1. Tragschiene (5) eines Ährenhebers für Erntegut, mit einer Haupterstreckungsrichtung (X), wobei zwischen einem ersten Ende (8) und einem zweiten Ende (9) der Tragschiene ein als Gleitkufe ausgebildeter Abschnitt (12) angeordnet ist,
**dadurch gekennzeichnet,**
**dass** der als Gleitkufe ausgebildete Abschnitt (12) in einem Schnitt quer zu der Haupterstreckungsrichtung (X) zumindest bereichsweise ein wellenförmiges Profil aufweist.

2. Tragschiene nach Anspruch 1, **dadurch gekennzeichnet, dass** der als Gleitkufe ausgebildete Abschnitt (12) dazu vorgesehen ist, mit einer Außenseite (15) über einen Boden (6) geführt zu werden, wobei von der Außenseite mindestens zwei Wellenberge (14) des wellenförmigen Profils aufragen.

3. Tragschiene nach Anspruch 2, **dadurch gekennzeichnet, dass** der als Gleitkufe ausgebildete Abschnitt (12) seitliche Flanken (17) aufweist, wobei die seitlichen Flanken zu einer der Außenseite (15) gegenüberliegenden Innenseite (18) hin angewinkelt sind.

4. Tragschiene nach einem der vorhergehenden Ansprüche, **dadurch gekennzeichnet, dass** der als Gleitkufe ausgebildete Abschnitt (12) in dem Schnitt quer zu der Haupterstreckungsrichtung (X) spiegelsymmetrisch ausgebildet ist.

5. Tragschiene nach einem der vorhergehenden Ansprüche, **dadurch gekennzeichnet, dass** das wellenförmige Profil entlang der Haupterstreckungsrichtung (X) über eine Länge des als Gleitkufe ausgebildeten Abschnitts (12) in seiner Ausprägung variiert, insbesondere, indem die Ausprägung des Profils von einem mittleren Bereich des als Gleitkufe ausgebildeten Abschnitts (12) aus in beiden Richtungen abnimmt.

6. Tragschiene nach einem der Ansprüche 2 bis 5, **dadurch gekennzeichnet, dass** eine Verschleißschutzschicht (19) auf der Außenseite (15) aufgebracht ist.

7. Tragschiene nach Anspruch 6, **dadurch gekennzeichnet, dass** die Verschleißschutzschicht (19) über eine gesamte Breite des Profils aufgebracht ist.

8. Tragschiene nach einem der Ansprüche 6 oder 7, **dadurch gekennzeichnet, dass** das Profil jeweils ein Wellental (16) zwischen zwei benachbarten Wellenbergen (14) aufweist, wobei das Wellental zumindest teilweise durch die Verschleißschutzschicht (19) aufgefüllt ist.

9. Tragschiene nach Anspruch 8, **dadurch gekennzeichnet, dass** die Verschleißschutzschicht (19) bündig in das Wellental (16) eingebracht ist.

10. Tragschiene nach Anspruch 8, **dadurch gekennzeichnet, dass** die Verschleißschutzschicht (19) über die Wellenberge (14) hinausragend aufgebracht ist.

11. Tragschiene nach einem der Ansprüche 6 bis 10, **dadurch gekennzeichnet, dass** ein Material der Verschleißschutzschicht (19) so gewählt ist, dass ein Verschleißverhalten der Verschleißschutzschicht (19) einem Verschleißverhalten des als Gleitkufe ausgebildeten Abschnitts (12) vergleichbar ist.

12. Tragschiene nach einem der Ansprüche 6 bis 11, **dadurch gekennzeichnet, dass** ein Material der Verschleißschutzschicht (19) so gewählt ist, dass eine Härte der Verschleißschutzschicht (19) einer Härte des als Gleitkufe ausgebildeten Abschnitts (12) vergleichbar ist.

13. Tragschiene nach einem der Ansprüche 1 bis 7, **dadurch gekennzeichnet, dass** das Profil jeweils ein Wellental (16) zwischen zwei benachbarten Wellenbergen (14) aufweist, wobei mindestens ein Sperrnoppen (22) zum Aufstauen von Bodenmaterial in jedem Wellental angeordnet ist.

14. Tragschiene nach einem der vorhergehenden Ansprüche, **dadurch gekennzeichnet, dass** das Profil genau ein Wellental (16) zwischen zwei Wellenbergen (14) aufweist, wobei eine Höhe der zwei Wellenberge gegenüber dem Wellental gleich ist.

15. Ährenheber für ein Mähwerk einer Erntemaschine, mit einem Halmheber (10) und einer den Halmheber tragenden Tragschiene (5) nach einem der vorhergehenden Ansprüche.

## Claims

1. Support bar (5) of a crop lifter for crops, having a main extension direction (X), wherein between a first end (8) and a second end (9) of the support bar a portion formed as a skid (12) is arranged,
**characterised in**
**that** the portion formed as a skid (12) comprises at least portion-wise an undulated contour in a sectional view transversal to the main extension direction (X).

2. Support bar according to claim 1, **characterised in that** the portion formed as a skid (12) is provided to be guided with an outer side (15) over a ground (6), wherein at least two wave crests (15) of the undulated contour project from the outer side.

3. Support bar according to claim 2, **characterised in that** the portion formed as a skid (12) comprises lateral flanks (17), wherein the lateral flanks are angled to an inner side (18) arranged opposite to the outer side (15).

4. Support bar according to any one of the preceding claims, **characterised in that** the portion formed as a skid (12) is formed mirror-symmetrically in a sectional view transversal to the main extension direction (X).

5. Support bar according to any one of the preceding claims, **characterised in that** the undulated contour varies in shape along the main extension direction (X) over a length of the portion formed as a skid (12), in particular the shape is tapering off from a central sector of the portion formed as a skid (12) towards both directions.

6. Support bar according to one of claims 2 to 5, **characterised in that** a wear protection layer (19) is deposited on the outer side (15).

7. Support bar according to claim 6, **characterised in that** the wear protection layer (19) is deposited along a whole width of the contour.

8. Support bar according to one of claims 6 or 7, **characterised in that** the contour comprises, respectively, a wave trough (16) between two neighbouring wave crests (14), wherein the wave trough is filled at least partially by the wear protection layer (19).

9. Support bar according to claim 8, **characterised in that** the wear protection layer (19) is deposited flush in the wave trough (16).

10. Support bar according to claim 8, **characterised in that** the wear protection layer (19) is deposited projecting beyond the wave crests (14).

11. Support bar according to one of claims 6 to 10, **characterised in that** a material of the wear protection layer (19) is selected such, that a wear characteristic of the wear protection layer (19) is comparable to a wear characteristic of the portion formed as a skid (12).

12. Support bar according to one of claims 6 to 11, **characterised in that** a material of the wear protection layer (19) is selected such, that a hardness of the wear protection layer (19) is comparable to a hardness of the portion formed as a skid (12).

13. Support bar according to one of claims 1 to 7, **characterised in that** the contour comprises, respectively, a wave trough (16) between two neighbouring wave crests (14), wherein at least one blocking burling (22) is arranged for accumulating material of the ground in each wave trough.

14. Support bar according to any one of the preceding claims, **characterised in that** the contour has exactly one wave trough (16) between two wave crests (14), wherein a height of the two wave crests is equal relative to the wave trough.

15. Grain lifter for a cutter of a harvester, having a crop lifter (10) and a support bar (5) supporting the crop lifter according to any one of the preceding claims.

## Revendications

1. Rail de support (5) d'un releveur d'épis pour la récolte, avec une direction d'extension principale (X), dans lequel une section conçue comme un patin de glissement (12) est disposée entre une première extrémité (8) et une deuxième extrémité (9) du rail de support,
**caractérisé en ce que**
la section conçue comme un patin de glissement (12) présente au moins par endroits un profil ondulé dans une coupe transversale à la direction d'extension principale (X).

2. Rail de support selon la revendication 1, **caractérisé en ce que** la section conçue comme un patin de glissement (12) est prévue pour être guidée avec un côté extérieur (15) sur un sol (6), dans lequel au moins deux crêtes d'ondulation (14) du profil ondulé font saillie sur le côté extérieur.

3. Rail de support selon la revendication 2, **caractérisé en ce que** la section conçue comme un patin de glissement (12) présente des flancs latéraux (17), les flancs latéraux étant coudés vers un côté intérieur (18) opposé au côté extérieur (15).

4. Rail de support selon l'une des revendications précédentes, **caractérisé en ce que** la section conçue comme un patin de glissement (12) est conçue symétriquement dans la coupe transversale à la direction d'extension principale (X).

5. Rail de support selon l'une des revendications précédentes, **caractérisé en ce que** le profil ondulé présente un bossage variable le long de la direction d'extension principale (X), sur une longueur de la section conçue comme un patin de glissement (12), en particulier **en ce que** le bossage du profil diminue dans les deux directions à partir d'une région centrale de la section conçue comme un patin de glissement (12).

6. Rail de support selon l'une des revendications 2 à 5, **caractérisé en ce qu'**une couche de protection contre l'usure (19) est appliquée sur le côté extérieur (15).

7. Rail de support selon la revendication 6, **caractérisé en ce que** la couche de protection contre l'usure (19) est appliquée sur toute une largeur du profil.

8. Rail de support selon l'une des revendications 6 ou 7, **caractérisé en ce que** le profil présente respectivement un creux d'ondulation (16) entre deux crêtes d'ondulation (14) voisines, le creux d'ondulation étant au moins partiellement rempli par la couche de protection contre l'usure (19).

9. Rail de support selon la revendication 8, **caractérisé en ce que** la couche de protection contre l'usure (19) est introduite en affleurement dans le creux d'ondulation (16).

10. Rail de support selon la revendication 8, **caractérisé en ce que** la couche de protection contre l'usure (19) est appliquée de manière à faire saillie sur les crêtes d'ondulation (14).

11. Rail de support selon l'une des revendications 6 à 10, **caractérisé en ce qu'**un matériau de la couche de protection contre l'usure (19) est sélectionné de telle façon qu'un comportement à l'usure de la couche de protection contre l'usure (19) peut être comparé avec un comportement à l'usure de la section conçue comme un patin de glissement (12).

12. Rail de support selon l'une des revendications 6 à 11, **caractérisé en ce qu'**un matériau de la couche de protection contre l'usure (19) est sélectionné de telle façon qu'une dureté de la couche de protection contre l'usure (19) peut être comparée avec une dureté de la section conçue comme un patin de glissement (12).

13. Rail de support selon l'une des revendications 1 à 7, **caractérisé en ce que** le profil présente respectivement un creux d'ondulation (16) entre deux crêtes d'ondulation (14) voisines, dans lequel au moins un picot de verrouillage (22) est disposé dans chaque creux d'ondulation pour l'accumulation de matériau de sol.

14. Rail de support selon l'une des revendications précédentes, **caractérisé en ce que** le profil présente exactement un creux d'ondulation (16) entre deux crêtes d'ondulation (14), une hauteur des deux crêtes d'ondulation étant égale par rapport au creux d'ondulation.

15. Releveur d'épis pour une faucheuse d'une machine de récolte, avec un releveur de tiges (10) et un rail de support (5) selon l'une des revendications précédentes, portant le releveur de tiges.
